# EUROPÄISCHE PATENTANMELDUNG

(11) **EP 0 833 487 A2**
(43) Veröffentlichungstag der Anmeldung: **01.04.1998**
(21) Anmeldenummer: 97116328.2
(22) Anmeldetag: 19.09.1997
(51) Int. Cl.: H04M 1/00

(54) **Digitales Chipkartentelefon mit Faxweiche und Modemanschluss**

(30) Priorität: 19.09.1996 DE 19638315; 09.11.1996 DE 29619503 U
(71) Anmelder: Card Design & Communicaton Sales GmbH, 16303 Schwedt (DE)
(72) Erfinder: Braitsch, Hartmut, 42489 Wülfrath (DE)
(74) Vertreter: Stratmann, Ernst, Dr.-Ing.

(57) **Zusammenfassung**

Beschrieben wird ein digitales Chipkartentelefon (10), umfassend eine Lese-/Schreibeinrichtung (24) für eine Chipkarte (20), gekennzeichnet durch eine Schalteinrichtung (24), die bei eingesteckter gültiger Chipkarte (20) das Telefon (10) von Normalbetrieb (Funktion wie ein Standardtelefon) auf einen vom Normalbetrieb abweichenden Betrieb umschaltet, dessen Funktion durch im Telefon (10) und/oder in der Chipkarte (20) gespeicherte Daten festgelegt ist.

## Beschreibung

Die Erfindung betrifft ein digitales Chipkartentelefon, umfassend eine Lese-/Schreibeinrichtung für eine Chipkarte.

In der DE 40 08 790 C2 wird ein Fernsprechwählnetz mit stationären und mobilen Teilnehmern beschrieben, bei dem die stationären Teilnehmer konventioneller Netze jeweils über eine individuelle Teilnehmeranschlußleitung mit der einzigen Vermittlungsstelle verbunden sind Die Verbindung der mobilen Teilnehmer mit der Verbindungsstelle erfolgt über eine einzige Teilnehmeranschlußleitung, an die parallel mehrere Sende-/Empfangsgeräte angeschlossen sind, die entsprechend vielen mobilen Teilnehmern zugeordnet sind. Damit die individuelle Zuordnung eines persönlichen Kannzeichens zu jedem Teilnehmeranschluß geschaffen wird, wird eine Steckkarte mit individueller Codierung verwendet, die in jedem Teilnehmerapparat einsteckbar ist, um diesen entsprechend der Codierung der Steckkarte individuell zu kennzeichnen und von der Vermittlungsstelle aus identifizierbar zu machen. Jede die Fernsprechanlage benutzende Person ist dann aufgrund ihrer in einen beliebigen Teilnehmerapparat eingesteckten Steckkarte bei dem betreffenden Teilnehmerapparat erreichbar.

In diesem Zusammenhang verweist die Druckschrift weiter auf die DE-PS 38 10 305.

Was im einzelnen diese Steckkarte mit individueller Codierung bewirkt, wird allerdings in der Druckschrift nicht näher erläutert.

Die DE 195 48 393 A1 beschreibt eine Vorrichtung und ein Verfahren für die Auswahl persönlicher Merkmale und deren Verwaltung unter Verwendung eines Speichers für bestimmte besondere Daten. Die Vorrichtung arbeitet mit einer tragbaren Speicherkarte (das ist eine Chipkarte), oder alt einer zentralen Datenbank. Das beschriebene Vorfahren ist für zellulare Telefonsysteme einsetzbar, aber auch für völlig andere Anwendungsgebiete. Es geht um benutzerspezifische Programmierung, derart, daß eine besonders einfache Anpassbarkeit an unterschiedliche Hardware ermöglicht wird.

Die DE 195 41 306 A1 beschäftigt sich alt einer Telefonkarte mit Aktivkommunikation nebst zugehörigem Gerät. Die Telefonkarte ermöglicht eine Reserve für Telefongebühren anzulegen. Zu dieses Zweck besitzt die Telefonkarte ein Speichermedium, das mittels Schreib- oder Lesegeräten manipuliert werden kann. Es kann Telefonnummern, Adressen, Kurzwahl und ähnliches gespeichert werden. Mittels eines erweiterten Fernsprechers kann diese Telefonkarte bei Direkttelefonwahl unmittelbar auf die gespeicherten Telefonnummern zugreifen und den anderen Teilnehmer durchwählen. Mittels eines Laufwerks innerhalb des Telefons können die auf der Telefonkarte gespeicherten Daten gelesen, versendet und woanders wieder empfangen werden.

Die DE 195 37 087 A1 beschäftigt sich mit einer Anordnung eines Verfahrens zur ferngesteuerten Initialisierung eines Telefons. Die in einem Server oder in einem intern/extern angeordneten Speicher eines Telefons abgespeicherten Steuerinformationen für automatische Funktionen werden über eine zusätzlich angeordnete Schnittstelle im Telefon ferngesteuert initialisiert. Anschließend erfolgt automatisch oder über zusätzliche Schnittstellen von außen beeinflußt, geändert oder beendet der jeweilige Funktionsablauf. Die Anordnung verwendet ein Fernsehgerät und dessen Fernbedienung.

Die DE 195 13 746 A1 beschäftigt sich mit einer Einrichtung zur Sicherung eines Telefondienstanschlusses gegen mißbräuchliche Nutzung. Das Telefonendgerät besitzt eine Tastatur zur Eingabe einer persönlichen Identifikationsnummer (PIN) ferner eine in der Vermittlungstechnik eingebaute zweite Chipkarte. Im Endgerät ist ein Kartenlesemodul und eine erste Chipkarte angeordnet, die zur Identifikation des die PIN über die Tastatur am Endgerät eingebenden Teilnehmers dient. Die erste Chipkarte authentifiziert sich gegenüber der in der Vermittlungsstelle eingebauten zweiten Chipkarte. Die Einrichtung soll die Sicherheit des Teilnehmers gegen Mißbrauch und Manipulation erhöhen.

Die DE 43 07 122 A1 schildert eine Chipkarte. Insbesondere geht es um die Vergrößerung der von einer Chipkarte ausführbaren Funktionen. Sie soll in der Lage sein, Telekommunikationsprotokolle zu bearbeiten und in der Lage sein, Signalisierungs- und Nutzdaten zu empfangen, zu speichern und zu verarbeiten.

Bei der DE 43 06 198 A1 geht es um eine Telekommunikationseinrichtung, die sich an Erweiterung von Leistungsmerkmalen anpassen läßt und überall anwendbar sein soll. Sie besteht aus Endgerät, Chipkarte und Memorykarte. Die Memorykarte erweitert den Speicher, während die Chipkarte die Benutzeroberfläche und die Gerätekonfiguration enthält.

Bei der DE 42 26 671 A1 geht es um ein Verfahren und eine Anordnung zur wahlweisen Anschaltung von über maschinenlesbare Karten betriebene Endgeräte. Anwendungsfälle sind alleinstehende Kartentelefone, Anschlußboxen in Hotelzimmern, Anschlußboxen für Bezahlvorgänge und für Zugangskontrollen.

Bei der DE 41 14 899 A1 geht es um ein Kreditkarten-Faxphone-Terminal. Mit diesem Gerät soll der Benutzer in dar Lage sein, frei und vertraulich Faxberichte zu versenden bzw. zu empfangen, vorzugsweise ausschließlich mit Hilfe einer Kreditkarte.

Die DR 34 28 237 A1 beschreibt eine Anordnung zum Einstellen unteschiedlicher Kommunikationsdienste in einem Kommunikationsgerät. Benutzt wird dazu ein Chipkartenleser, in den verschiedene Chipkarten eingesteckt werden können. Die Chipkarten enthalten Schaltkreise, die unterschiedlichen Kommunikotionsdiensten zugeordnet sind und die die Funktionen des Kommunikationsgerätes derart erweitern, daß weitere Kommunikationsdienste mittels des Kommunikationsgerätes durchführbar sind. Als integrierte Schaltkreise für die Chipkarte dienen freiprogrammierbare Mikroprozessoren und/oder Speicher und/oder Speicher mit frestverdrahteter Logik.

Die DR 44 28 068 A1 beschreibt ein Telekommunikationsendgerät, das unter Verwendung einfacher Mittel um eine Vielzahl von Funktionen erweitert werden kann. Das Telekommunikationsgerät setzt sich aus einem digitalen Signalprozessor, einer Schnittstelle zum Eingeben von Software und aus Mitteln zum Starten der Eingabe und einer Ausführung der Software zusammen. Software zur Ausführung von Basisfunktionen ist fest implementiert und Software zur Ausführung von Sonderfunktionen wird wahlweise über die Schnittstelle aufgerufen und geladen.

In der US-PS 5,557,662 wird ein Facsimile-Gerät beschrieben, das mit einem chipkartenförmigen Rechner ausgestattet ist. Die Telefonnummern und andere Informationen, die üblicherweise in der Facsimile-Einheit gespeichert sind, sind auf der Karte gespeichert.

In der US-PS 5,521,966 wird ein Kommunikationssystem beschrieben, bei des eine Chipkarte (smart card) verwendet wird. Die durchgeführten Manipulationen werden auf der Chipkarte aufgezeichnet, wie auch auf einem Datenträger, der mit der Kartenleseeinrichtung verbunden ist.

Die US-PS 5,144,654 beschäftigt sich mit einem automatischen Telefonwählsystem, bei dem eine optische Eingabe der Telefonnummern aus einem gedruckten Material verwendet wird. Dabei dienen sogenannte Strichcodierungen als Speichermedium.

In der EP 0 625 839 A1 wird ein Chipkartentelefonzusatzgerät beschrieben. Dieses umfaßt einen Chipkartenleser, der den Benutzer mit zusätzlichen Eingabemöglichkeiten ausstattet. Der Benutzer des Telefons kann mit einer Telefonzentrale über Sprachkontakt oder über die Chipkarte korrespondieren.

In einem Aufsatz von Blab, Herbert, A: ITG-Fachbericht 121, Nutzung und Technik von Kummunikationsendgeräten, VDE-Verlag GmbH, Berlin und Offenbach, 1992, Seiten 291 bis 301 und Seiten 294 bis 296 geht es um die Integration des Fernsprechnetzes mit den digitalen Möglichkeiten der Datenübertragung (ISDN). Es werden bestimmte Anwendungsmöglichkeiten geschildert, wie beispielsweise Chipkartentechnik in Verbindung mit Kryptosystemen, die in gemischten Sprach-/Datennetzen sich ergänzen.

Aufgabe der Erfindung ist es, ein digitales Chipkartentelefon gemäß der eingangs genannten Art zu schaffen, bei dem das Telefon je nach Bedarf eine gewünschte Funktion ausübt. Insbesondere soll eine Telefaxeinrichtung anschließbar sein und/oder ein Modemanschluß zum Betreiben einer Modemverbindung.

Gelöst wird diese Aufgabe durch eine Schaltereinrichtung, die bei eingesteckter gültiger Chipkarte das Telefon von Normalbetrieb (Funktion wie ein Standardtelefon) auf einen vom Normalbetrieb abweichenden Betrieb umschaltet, dessen Funktion durch im Telefon und/oder in der Chipkarte gespeicherte Daten festgelegt ist.

Auf diese Weise wird eine außerordentlich hohe Flexibilität für die Funktionsweise eines derartigen Telefons erreicht.

Gemäß einer Weiterbildung weist das Chipkartentelefon eine integrierte Telefaxweiche und/oder einen Modem-Anschluß zum Betreiben eines Telefaxgerätes oder einer Modemverbindung in Abhängigkeit von in der Chipkarte gespeicherten Daten auf.

Die Soft- und/oder Hardware des Chipkartentelefons ist günstigerweise derart einstellbar, daß ein Betrieb sowohl an digitalen Hauptanschlüssen (z. B. EURO-ISDN) als auch an digitalen Nebenstellenanlagen unterschiedlicher Bauart bzw. verschiedener Hersteller möglich ist.

Gemäß einer noch anderen Weiterbildung ist eine Steuerung vorgesehen, insbesondere eine Mikroprozessorsteuerung, die nach Einlesen der Chipkarte die Gültigkeit der Chipkarte anhand von Identifikationskriterien überprüft.

Gemäß einer noch anderen Ausführungsform der Erfindung ist eine Steuerung vorgesehen, die aus der Chipkarte eine bestimmte Tastaturbelegung für das Telefon ausliest und wirksam werden läßt, was die Handhabung bei bestimmten Anwendungsfällen enorm erleichtert.

Gemäß einer noch anderen Ausführungsform ist eine Steuerung vorgesehen, die aus der Chipkarte Daten für zu überwachende Wahlsequenzen auszulesen in der Lage ist.

Gemäß einer noch anderen Ausführungsform ist die Tastatur des Telefons mit einer Sondertaste ausgestattet, die mit einer Steuerung derart verbunden ist, daß bei ihrer Betätigung eine bestimmte, fest vorgegebene Wahlsequenz ausgelöst wird.

Gemäß einer noch anderen Ausführungsform der Erfindung ist eine Speichervorrichtung vorgesehen, um die Zeichen einer zu überwachenden gewählten Wahlsequenz zu speichern, sowie eine Vergleichervorrichtung zum Vergleich der gewählten, zwischengespeicherten Wahlsequenz, sowie eine Generatoreinrichtung für eine auf der Karte gespeicherte Wahlsequenz bei Übereinstimmung von gespeicherter Wahlsequenz mit zu überwachender Wahlsequenz.

Gemäß einer noch anderen Ausführungsform der Erfindung weist das Telefon Kurzwahltasten-Generatoreinrichtungen auf, um eine vorbestimmte Wahlsequenz bei Betätigung einer Taste oder einer Tastenkombination zu erzeugen. In dem Falle ist es günstig, wenn Einrichtungen vorgesehen sind, die die vorbestimmte Wahlsequenz daraufhin überprüft, ob sie die zu überwachende Zeichenfolgen aufweist, und die dies durch eine andere, z. B. auf der Chipkarte gespeicherte Folge ersetzt, die anderen Zeichen aber unverändert läßt.

Gemäß einer weiteren Ausführungsform ist das Telefon modular aufgebaut.

Das digitale Chipkartentelefon kann ein Modul aufweisen, der einen Betrieb an einem digitalen 2-Drahtanschluß und/oder an einem digitalen 4-Drahtanschluß ermöglicht.

Desweiteren ist die Software des Telefons bzw. des Moduls derart einstellbar, daß ein Betrieb sowohl an digitalen Hauptanschlüssen (z. B. EURO-ISDN) als auch an digitalen Nebenstellenanschlüssen (z. B. hinter Telekommunikations-Anlagen (TK-Anlagen) verschiedener Hersteller) möglich ist.

Gemäß einer noch anderen Ausführungsform ist die Chipkarte mit eine: SIM-Modul kombiniert.

Die Erfindung betrifft auch ein Verfahren zum Betrieb eines digitalen Chiptelefons, insbesondere gemäß einer der vorgenannten Arten von Chiptelefonen, wobei das Verfahren insbesondere folgendes umfaßt:
Bereitstellung eines Betriebsystems zur Implementierung der Grundfunktionen des Chipkartentelefons oder ähnlichen Gerätes (z. B. Internet-PC, Labtop, Kommunikator), wie zum Betrieb des Chipkartentelefons als normales Telefon, zur Bedienung der Schnittstellen (wie ISDN, a/b), der Funktionselemente des Telefons (Display, Tastatur, Kartenleseeinrichtung), sowie zur Implementierung eines Befehlsinterpreters für Zusatzfunktionen.

Bei des Verfahren kann der Befehlsinterpreter einen Standard-Befehlssatz umfassen, der um externe Befehle (Zusatzbefehle) erweiterbar ist.

Auf der Chipkarte können kundenspezifische Programmteile gespeichert werden, wobei ein Programmteil aus kundenspezifischen Befehlen bestehen mag (Erweiterung des Befehlsinterpreters um neue Befehle), ein anderer Teil aus des vom Interpreter auszuführenden Programmcode`

Zur Trennung der Intelligenz des Endgerätes von der Anwendung der Befehlsinterpreterfunktionen kann es einen Zugriff auf externe Datenquellen geben, wo kundenspezifische Befehle (Erweiterung des Befehlsinterpreters) und/oder Programmcode liegt.

Daten für den Befehlsinterpreter können von dedizierten Servern als auch von Datenquellen (z. B. aus dem Internet) erhalten werden.

Alle Anwendungsfunktionen des Endgerätes, wie Telefon, erfolgt durch Tausch der Chipkarte. Eine andere Anwendungsfunktion des Endgerhätes, wie Telefon, ist die automatische Verteilung von Tabellen für Least-Cost-Routing.

Eine weitere Anwendungsfunktion des Endgerätes, wie Telefon, ist die End- zu End-Verschlüsselung.

Eine weitere Anwendungsfunktion des Endgerätes, wie Telefon, ist die netzwerkweite ACD-Anwendung.

Das Verfahren verwendet ein Betriebssystem, das aus einem Systemkern (Kernel) besteht, welche die Anpassung an die aktuelle Hardware realisiert, umfassend insbesondere Routinen zur Tastatur-Abfrage, Display-Steuerung und Steuerung der ISDN-Interfaces, sowie hardewareunabhängiger Software, die über ein Applikationsinterface (API) auf die Funktionen des Kernels zugreift.

Diese weiteren Teile der Sofware können als dynamisch linkbare Objekte realisiert sein, wobei ein Objekt sowohl Programm-Code als auch Daten umfaßt. Diese dynamisch linkbaren Objekte können resident im Speicher des Kartentelefons oder der Chipkarte (residente Objekte), temporär im RAM des Kartentelefons (temporäre Objekte) oder abgesetzt auf dedizierten Servern, im Internet oder auf anderen Kartentelefonen (abgesetzte Objekte) liegen.

Die Verbindung der einzelnen Objekte kann mittels eines Objekthandlers erfolgen, der die Registrierung und die Verbindung der Objekte übernimmt.

Der Objekthandler kann beim Start des Systems (Einschalten) initialisiert werden und alle Objekte in seinem Zugriffsbereich registrieren.

Der Objekthandler kann die Systemumgebung auf das Erscheinen neuer Objekte (z. B. Einstecken der Chipkarte mit Programm und Daten) überwachen und derartige Objekte in die Registrierung des Objekthandlers übernehmen.

Abgesetzte Objekte können durch einen Aufruf eines residenten Objektes, welches einen Link zum Standort des Objekts (z. B. Serveradresse) enthält, initialisiert werden.

Nach Initialisierung des abgesetzten Objekts kann der Verbund zu dem Standort des Objektes hergestellt und das Objekt angemeldet werden.

Bei der Anmeldung des Objekts wird festgelegt, ob das Objekt abgesetzt bleibt, temporär in den RAM geladen wird oder ob dem Objekthandler die Entscheidung zugeordnet wird, bei knappen Ressourcen entsprechend der Ressourcenauslastung eine Wahl zu treffen, ggf. unter Berücksichtung einer angegebenen Priorität.

Die dynamisch linkbaren Objekte können Organisationsobjekte (reine Orangisationsfunktion in einer Applikation) sein, oder durch ein Ereignis getriggerte Objekte (Aktivierung durch ein Ereignis außerhalb der Applikation, z. B. der Auswertung von über die Tastatur eingegebenen Wahlziffern), Funktionsobjekte (Aktivierung durch Ereignisse innerhalb der Applikation, z. B. Abfrage der internen Rufnummerndatenbank) oder Kommunikationsobjekte (dienen der Verbindung von Objekten).

Die Kommunikationsobjekte können zur Verbindung von Objekten als interne Kommunikation durchgeführt werden, und zwar zwischen residenten Objekten, zwischen residenten und abgesetzten Objekten oder zuwischen abgesetzten Objekten, sowie mit der eigentlichen Applikation.

Das Objekt kann einen Objektkopf umfassen, der einen Namen (optional), eine Kennung (eindeutige Kennzeichnung des Objekts), eine Priorität (temporär zu laden oder abgesetzt auszuführen oder Entscheidung durch Objekthandler nach Ressourcen), die Art (Funktionalität, nämlich Organisation, Ereignis, Funktion oder Kommunikation) des Objektes sowie einen Parameterblock umfassen.

Der Objekthandler kann für die Dauer der Registrierung dem Objekt eine temporäre Priorität zuweisen, die innerhalb der Reichweite dieses Objekthandlers liegt (z. B. nur für ein Kartentelefon).

Die Registrierung von abgesetzten Objekten kann über den Aufruf eines Kommunikationsobjektes erfolgen, welches daraufhin entweder den Link zu dem zu registrierenden Objekt (als Parameter) übergeben bekommen, oder selbst den Link erhält.

Die Registrierung von abgesetzten Objekten erfolgt immer über den Aufruf von Kommunikationsobjekten, während der eigentliche Aufruf immer über den Objekthandler erfolgt.

Die Erfindung wird anhand von Ausführungsbeispielen näher erläutert, die in den Zeichnungen dargestellt sind.

Es zeigt:
- Fig. 1: ein Chipkartentelefon der erfindungsgemäßen Ausbildung in einer Draufsicht; einschließlich einer zugehörigen Chipkarte;
- Fig. 2: in einer Blockschaltdarstellung die Arbeitsweise den digitalen Chipkartentelefons;
- Fig. 3: das in ein Netz eingebundene Chipkartentelefon gemäß der Erfindung;
- Fig. 4: eine Darstellung der Grundfunktion eines Betriebesystems;
- Fig. 5: der kundenspezifische Programmteil, der auf einer Chipkarte gespeichert ist:
- Fig. 6: eine Erläuterung der Verteilung von Least-Cost-Routing-Tabellen über Chipkarten;
- Fig. 7: eine Erläuterung zur End- zu End-Verschlüsselung;
- Fig. 8: eine Erläuterung einer netzwerkweiten ACD-Applikation;
- Fig. 9: den grundsätzlichen Aufbau den Betriebssystems; und
- Fig. 10: eine Darstellung des Konzepts der dynamisch linkbaren Objekte.

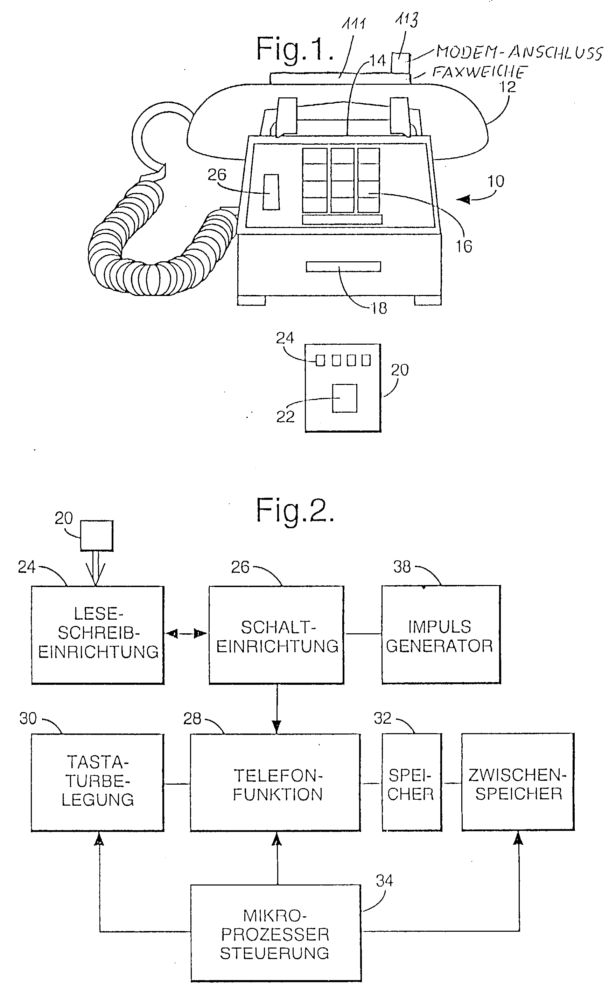

In Fig. 1 ist in Draufsicht ein digitalen Chiphartentelefon 10 zu erkennen, das die Form einen üblichen Tischgerätes aufweisen mag, beispielsweise bestehend aus einem Grundgehäuse 14 mit auflegbarem Hörer 12, Wahltastenfeld 16 sowie einem Schlitz 18, in das eine scheckkartengroße Chipkarte 20 eingeschoben werden kann, welche Chipkarte einen digitalen Speicherchip 22 trägt, sowie in geeigneter Weise angeordnete elektrische Kontakte 24, die bei eingeschobener Karte mit entsprechenden Anschlußkontakten im Telefon in elektrische Verbindung treten.

Durch diese Kontakte wird eine elektrische Verbindung zu dem Chip 22 hergestellt, um aus diesem mit Hilfe entsprechender Funktionseinrichtungen innerhalb den Kartentelefons 10 Daten auszulesen bzw. in diese Chipkarte einzuspeichern.

Anstelle der oben beschriebenen Schreib-/Leseeinrichtung können auch solche mit opto-elektrischen Einrichtungen vorgesehen werden, oder die Auslesung und die Einschreibung von Daten mit Hilfe von Magnetstreifen.

Innerhalb des Telefons ist eine Schalteinrichtung 26 vorgesehen, die in Fig. 1 nur als Block dargestellt ist, mit der unter Steuerung der eingesteckten Chipkarte das Telefon von Normalbetrieb, bei der das Telefon wie ein übliches Standardtelefon funktioniert, auf einen von diesem Normalbetrieb abweichenden Betrieb umgeschaltet werden kann, wobei die Funktion dieses von der Normalfunktion abweichenden Betriebs durch entweder im Telefon gespeicherte Daten oder (und) von in der Chipkarte gespeicherten Daten festgelegt wird. In Fig. 2 ist der Zusammenhang nochmals in Form eines Blockschaltdiagramms näher erläutert: Unter Verknüpfung der eingeschobenen Chipkarte 20 mit der Lese-/Schreibeinrichtung 24 wird die Chipkarte gelesen und der Chipkarteninhalt ggf. dahingehend ausgewertet, ob es sich um eine für dieses Telefon zugelassene Chipkarte handelt. Handelt es sich um eine gültige Chipkarte, können weitere Informationen aus dieser Chipkarte ausgelesen werden, oder auch entsprechend vorgegebenen Verfahrensabläufen Daten eingeschrieben werden. Unter der Steuerung dieser Daten wird dann eine Schaltereinrichtung 26 betätigt, die die Funktion des Telefons bei 28 dahingehend steuern kann, daß es entweder wie ein normales Telefon arbeitet, oder wie ein Telefon, das besondere Eigenschaften hat.

So könnte beispielsweise die Tastaturbelegung 30 derart abgewandelt werden, daß bei Betätigung bestimmter Zifferntasten nicht die entsprechende Ziffer gewählt wird, beispielsweise zur Ausgabe einer entsprechenden Anzahl von Impulsen, sondern daß statt dieser Einzelziffer eine Folge von Ziffern (Wahlsequenz) ausgelöst wird. Welche Ziffernfolge beispielsweise mit einer jeweiligen Taste hier verknüpft ist, kann in eines Speicher 32 festgelegt sein, oder aber auch im Speicherchip 20.

Insbesondere könnte das Chipkartentelefon 10 aber eine integrierte Telefaxweiche 11 aufweisen, und gleichzeitig oder auch alternativ einen Modem-Anschluß 113 (Anschluß für eine Modulator-Demodulator-Einrichtung), um in Abhängigkeit von den Daten der Chipkarte 20 ein Telefaxgerät zu betreiben und/oder eine Modem-Verbindung aufzubauen.

Die Soft- und Hardware kann dabei zweckmäßigerweise so eingestellt werden, daß ein Betrieb sowohl an digitalen Hauptanschlüssen (z. B. EURO-ISDN) als auch an digitalen Nebenstellenanschlüssen hinter TK-Anlagen verschiedener Hersteller ermöglicht wird.

Besonders günstig ist in diesem Zusammenhang eine Funktionsweise, bei der auf der Chipkarte ein bistimmter Geldbetrag "gespeichert" ist. Beim Fax- oder Telefonbetrieb wird dieses "Geldkonto" kontinuierlich mit den Gebühren belastet. Ist der gespeicherte Geldbetrag verbraucht, trennt das Chipkartentelefon automatisch die Verbindung.

Die verschiedenen Funktionen des Telefons können zweckmäßigerweise durch einen Mikroprozessor gesteuert werden, beispielsweise durch die in Fig. 2 erkennbare Mikroprozessorsteuerung 34. Eine derartige Mikroprozessorsteuerung ist insbesondere gut geeignet, die nach Einlesen der Chipkarte vorliegenden Daten dahingehend zu überprüfen, ob bestimmte Identifikationskriterien erfüllt sind. Ebenso könnte die Mikroprozessorsteuerung dafür Sorge tragen, daß aus der Chipkarte eine bestimmte Tastaturbelegung herausgelesen wird, die dann für die Tastatur des Telefons Gültigkeit erlangt. Andererseits kann die Mikroprozessorsteuerung auch unter Mithilfe eines Speichers 32 oder eines Speichers 36 das Telefon daraufhin überwachen, welche Wahlsequenz vom Benutzer in die Tastatur eingegeben wird. Diese eingegebene Wahlsequenz kann dann in den Zwischenspeicher gespeichert werden, und anschließend diese Wahlsequenz mit weiteren gespeicherten Wahlsequenzen verglichen werden. Dadurch wird es möglich, bestimmte Wahlsequenzen oder Teile von Wahlsequenzen herauszufiltern und durch andere zu ersetzen, beispielsweise dann, wenn infolge der an das Telefon angeschlossenen Netzbereiche nicht übliche Zifferfolgen erforderlich sind, sondern nur abgewandelte Ziffernfolgen. Dies kann der Fall sein, wenn das Netz umgeschaltet wird auf ein anderes Netz. Zur Erzeugung derartiger abgewandelter Zeichenfolgen kann beispielsweise ein Impulsgenerator 38 vorgesehen sein, wie in Fig. 2 dargestellt. Die Überwachung derartiger vorbestimmter Wahlsequenzen kann auch in dem Falle vorgenommen werden, daß bei Betätigung einer Taste oder einer Tastenkombination von des Telefon automatisch Wahlsequenzen erzeugt werden. Sofern diese Wahlsequenzen auftreten, werden sie ggf. durch andere Zeichenfolgen ersetzt, die entweder auf der Chipkarte gespeichert sind, oder sonstwie vorher festgelegt wurden. Dabei werden nur die zu überwachenden Zeichenfolgen durch die gespeicherte Folge ersetzt, während die übrigen Zeichen unverändert gelassen werden können.

Die Anordnung wird dadurch im Aufbau und in der Arbeitsweise außerordentlich einfach und gleichwohl flexibel.

Als besonders vorteilhaft hat es sich erwiesen, die Chipkarte mit einem SIM-Modul zu kombinieren, weil dadurch eine billig aufzubauende Schalteranordnung entsteht, die praktisch alle Wirkungsweisen, wie sie oben beschrieben wurden, verwirklicht.

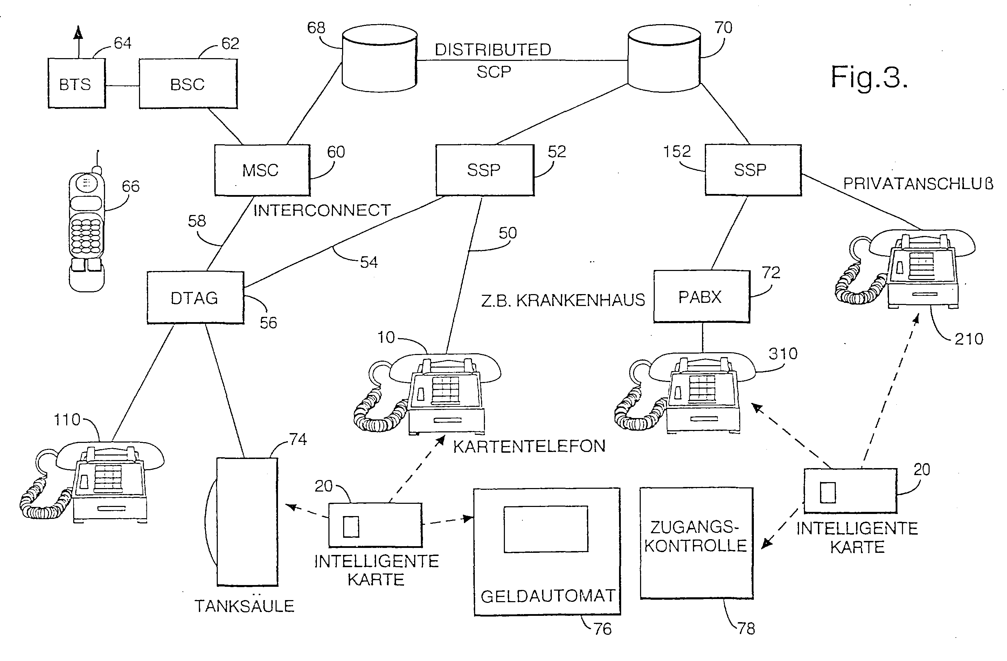

In Fig. 3 ist ein Kartentelefon gemäß Fig. 1 im Zusammenhang mit verschiedenen Netzen dargestellt, beispielsweise ist ein Kartentelefon 10, gesteuert durch eine "intelligente Karte" 20 über eine Datenverbindung 50 (wie beispielsweise eine Telefonleitung) mit einem sogenannten Koppelfeld 52 verbunden, das auch "Service-Switching-Point" (SSP) genannt wird. Zu diesem Koppelfeld führen weitere Leitungen 54 beispielsweise zum Netz der Deutschen Telecom AG (56), über die wiederum andere Telefonanlagen 110 erreichbar sind. Über die Deutsche TELECOM ist beispielsweise dann aber auch ein Mobilfunknetz erreichbar, beispielsweise das mit MSC bezeichnete Mobilfunk-Switching-Center 60, von dem eine Verbindung hergestellt ist zum Funkstationskontroller 62, BSC, der seinerseits mit Funkbasisstationen BTS in Verbindung steht, 64. Von diesen Funkbasisstationen BTS, 64, können dann drahtlose Funktelefone oder Mobiltelefone 66 angesprochen werden. In der Fig. 3 dargestellt sind noch verteilte Service-Kontroll-Punkte, mit denen die verschiedenen Netzbereiche untereinander verknüpft sind, siehe die Bezugszahlen 68, 70. Diese stehen dann wiederum mit weiteren Koppelfeldern 152 in Verbindung, wo entweder weitere Privatanschlüsse 210 direkt angeschlossen sind, oder aber über zwischengeschaltete größere Telefonanlagen 72, beispielsweise in einem Krankenhaus (PABX). Diese verschiedenen Telefone mögen wiederum mit Chipkarten steuerbar sein.

Die Chipkartentelefone und ihre Steuerung durch die Chipkarte ermöglicht nun, die normalerweise notwendigen verschiedenen Ziffernfolgen für die unterschiedlichen Telefonnetze dadurch zu erzeugen, daß sie normalerweise von dem Bediener eingegebene Ziffernfolgen durch für die entsprechenden Netze erforderliche Ziffernfolgen ersetzen. Die Bedienungsperson muß daher nicht die verschiedenen Ziffernfolgen kennen, die die einzelnen Netze für ihre Funktion benötigen, sondern sie wählt praktisch nur die bisher für sie üblichen Ziffern, wobei die Abwandlung zu der notwendigen Ziffernfolge durch die Chipkarte erfolgt.

Die Chipkarte kann aber auch ein Geldkonto oder Gebührenimpulskonto aufweisen, das beim Betrieb des Chipkartentelefons durch die Gebührenimpulse belastet wird, bis das Kontoguthaben (oder eine Kreditlinie) aufgebraucht ist. In diesem Moment könnte das Chipkartentelefon die Verbindung unterbrechen und den Benutzer veranlassen, seine Chipkarte in der dafür geeigneten Weise wieder zu füllen, d. h. durch Zahlung eines bestimmten Geldbetrages an die Ausgabefirma der Chipkarte diese veranlassen, den Dateninhalt der Chipkarte so zu verändern, daß ein "digitaler" Guthabenbetrag wieder zur Verfügung steht.

Im folgenden wird näher auf den Aufbau des Betriebsystems, auf das Konzept der dynamisch linkbaren Objekte und auf die Realisierung der Softwarekomponenten eingegangen.

Die im folgenden beschriebene Software wurde primär für die Anwendung in einem digitalen Chipkartentelefon entworfen, wie sie vorstehend beschrieben wurde. Das Systemdesign ist jedoch nicht darauf beschränkt, sondern ganz einfach und problemlos auch auf andere Plattformen importiert werden. Das können beispielsweise Internet-PC's (mit dem Internet verbundene Personalcomputer), Labtops (tragbare Personalcomputer), Kommunikatoren und ähnliches sein. Dazu ist die Software weitestgehend Hardware unabhängig entworfen. Durch das neuartige Prinzip der dynamisch linkbaren Objekte, das im folgenden noch beschrieben wird, ist es sogar möglich, die Software verteilt auf mehrere Rechner oder auch Chipkartentelefone im Netz laufen zu lassen. Die Realisierung der Software kann nach modernen Gesichtspunkten auf des Softwaredesign in zugehörigen Hochsprachen, wie C++ oder JAVA erfolgen.

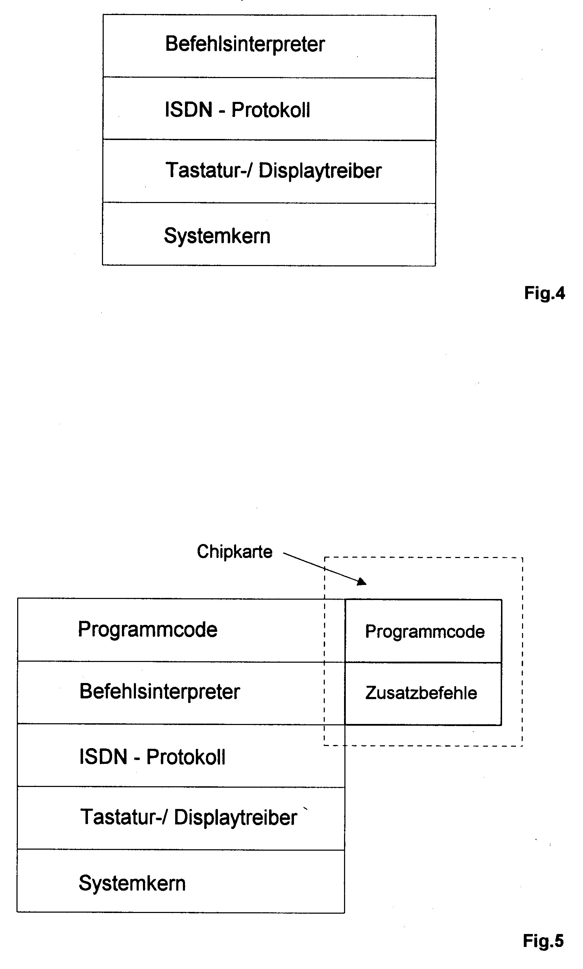

Das Betriebssystem stellt die Grundfunktion des Gerätes bereit (Arbeitsweise eines normalen Telefons). Es bedient die Schnittstellen (ISDN-Schnittstelle, a/b-Schnittstelle), und die Funktionselemente des Telefons (wie Display, Tastatur usw.). Diese Software bedient ebenfalls den Kartenleser und enthält einen Befehlsinterpreter für zusätzliche Funktionen, wie in Fig. 4 nochmals zusammengestellt: Dort umfaßt die Anordnung einen Befehlsinterpreter, ein ISDN-Protokoll, einen Tastatur-/Displaytreiber und einen Systemkern.

Der Befehlsinterpreter enthält einen Standard-Befehlssatz, der um externe Befehle erweiterbar ist. Der kundenspezifische Programmteil ist auf der Chipkarte gespeichert. Er besteht aus zwei Teilen, den kundenspezifischen Befehlen (Erweiterung des Befehlsinterpreters um neue Befehle) und dem Programmcode, welcher vom Befehlsinterpreter ausgeführt wird, wie in Fig. 5 näher erläutert ist. Zusätzlich enthält der Programminterpreter Funktionen zum Zugriff auf externe Datenquellen. Dort können sowohl kundenspezifische Befehle (Erweiterung des Befehlsinterpreters) als auch Programmcode liegen. Die Daten können sowohl von dedizierten Servern als auch anderen Datenquellen (z. B. aus dem Internet) geladen werden. Damit wird eine Trennung der Intelligenz des Endgerätes von der eigentlichen Applikation erreicht. Somit wird das Endgerät universell, eine Einführung neuer Dienste erfordert keine Änderung im Endgerät, sondern höchstens einen Tausch der Chipkarte.

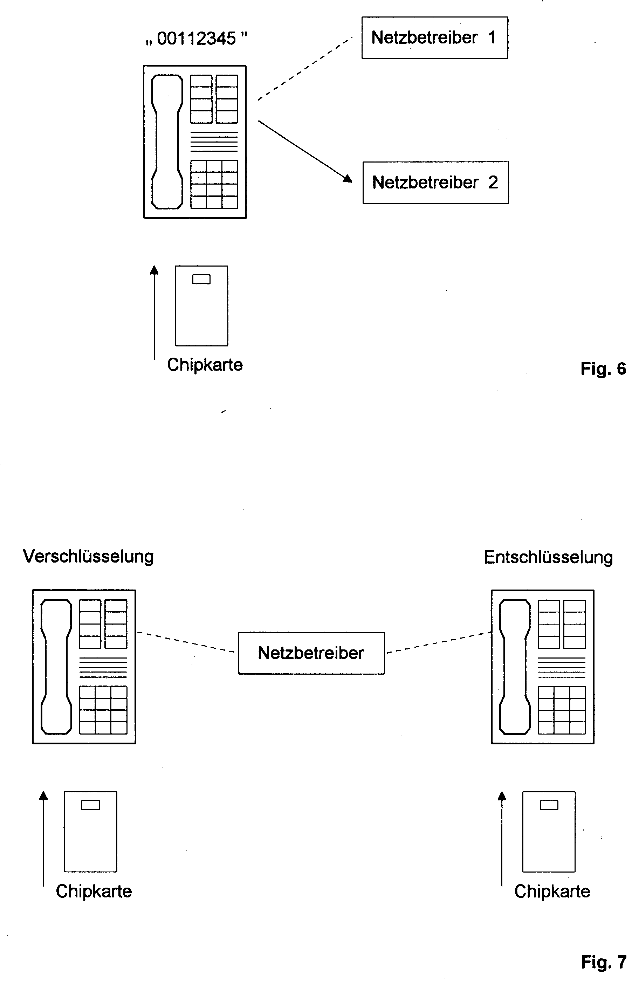

Eine erste Applikation (Anwendung) ist die automatische Verteilung von Tabellen für Least-Cost-Routing (also für Verbindungen, die die geringsten Kosten verursachen), siehe Fig. 6. Aufgrund der eingegebenen Telefonnummer wird beispielsweise ermittelt, welcher Netzbetreiber die geringsten Kosten für die Verbindung verursacht.

Eine weitere Anwendung ist in Fig. 7 dargestellt. Dort geht es um die End- zu End-Verschlüsselung eines Gespräches oder einer Datenübertragung, die mittels endseitig angeordneten Chipkarten erfolgt.

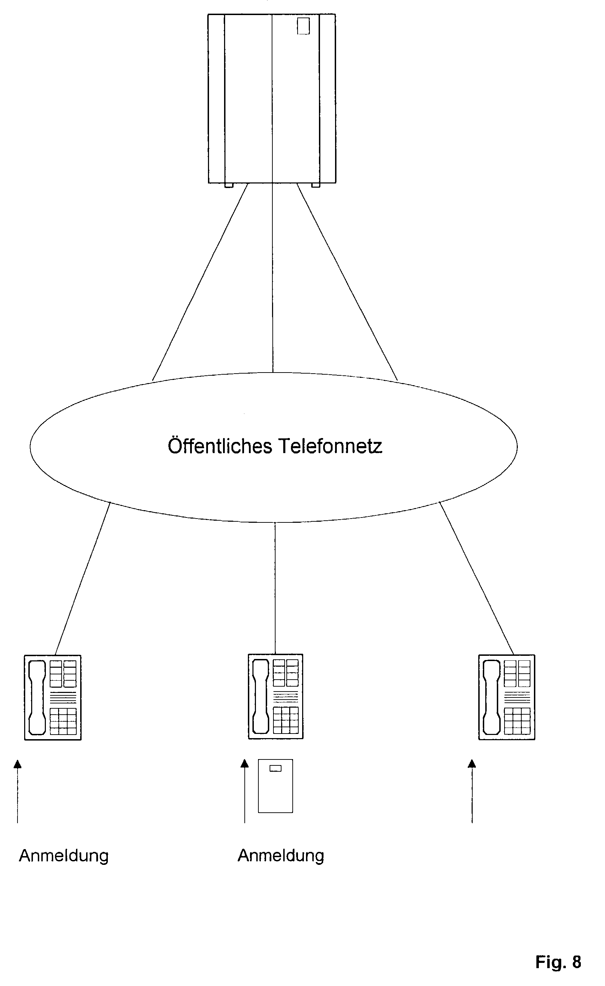

Fig. 8 zeigt desgegenüber eine netzwerkweite ACD-Applikation.

### Aufbau des Betriebssystems

Das Betriebssystem besteht aus des Systemkern (Kernel) welcher die Anpassung an die aktuelle Hardware realisiert. Dies umfaßt Routinen zur Tastaturabfrage, zur Display-steuerung und zur Steuerung des ISDN-Interfaces. Alle weiteren Teile der Software sind hardwareunabhängig und greifen über ein Applikationsinterface (API) auf die Funktionen des Kernels zu. Diese Teile sind als dynamisch linkbare Objekte realisiert. Ein Objekt enthält dabei sowohl Programmcode, als auch Daten. Die Objekte können resident im Speicher des Kartentelefons oder der Chipkarte (residente Objekte), temporär im RAM des Kartentelefons (temporäre Objekte) oder abgesetzt auf dedizierten Servern, im Internet oder auch auf anderen Kartentelefonen (abgesetzte Objekte) vorliegen.

Die Verbindung der einzelnen Objekte erfolgt über einen Objekthandler, der die Registrierung und die Verbindung der Objekte übernimmt. Der Objekthandler wird beim Start des Systems (Einschalten) initialisiert und registriert alle residenten Objekte in seinem Zugriffsbereich. Gleichzeitig überwacht er die Systemumgebung auf das Erscheinen neuer Objekte (z. B. Einstecken der Chipkarte mit Programmen und Daten). Diese werden automatisch in die Registrierung des Objekthandlers übernommen.

Abgesetzte Objekte können nur durch den Aufruf eines residenten Objekts, welches einen Link zum Standort des Objekts enthält (z. B. Serveradresse) lnitialisiert werden. Erfolgt ein solcher Aufruf, wird die Verbindung zum angegebenen Standort hergestellt und das Objekt angemeldet. Bei der Anmeldung kann festgelegt werden, ob das Objekt abgesetzt bleiben, temporär in den RAM geladen werden soll, oder ob der Objekthandler die Entscheidung entsprechend der Ressourcenauslastung übernehmen soll. Dazu kann eine Priorität angegeben werden. Der Objekthandler entscheidet bei knappen Ressourcen noch der Priorität welche Objekte temporär geladen werden. Das kann auch bedeuten, daß temporäre Objekte ausgelagert werden.

Nach der Registrierung der Objekte wird aus den registrierten Objekten der Befehlsinterpreter und der Ereignishandler generiert. Damit, und mit dem eigentlichen Programmcode ist die eigentliche Applikation vollständig beschrieben. Der Objekthandler arbeitet dabei weiter im Hintergrund.

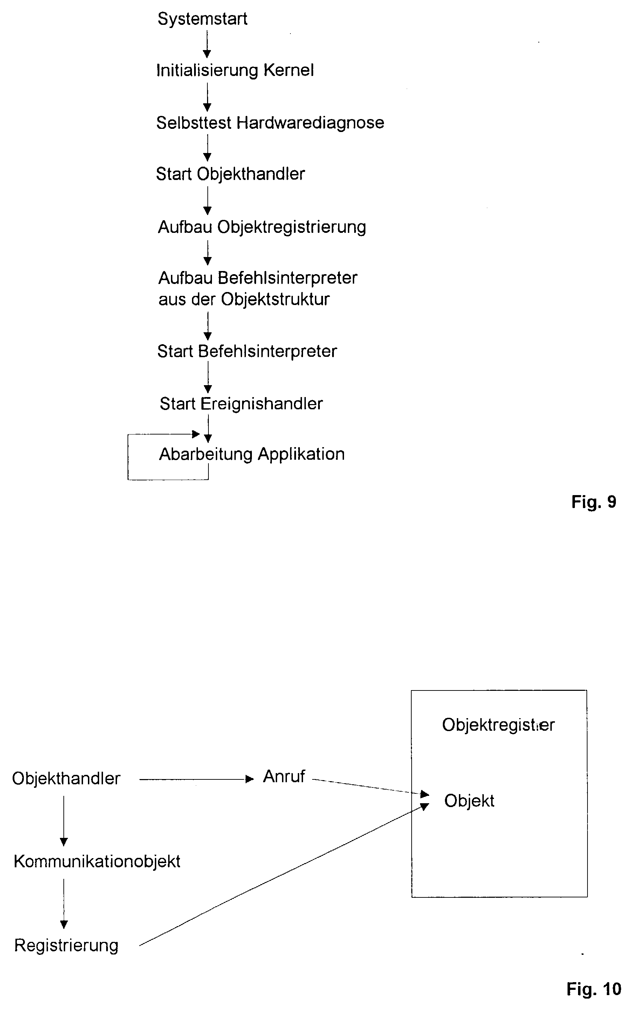

In Fig. 9 ist dieser Sachverhalt nochmals dargestellt.

### Konzept der dynamisch linkbaren Objekte

Dynamisch linkbare Objekte sind jeweils in sich abgeschlossene Blöcke von Programm und Daten. Es gibt verschiedene Klassen von Objekten:
Oganisationsobjekte
Ereignis getriggerte Objekte
Punktionsobjekte
Kommunikationsobjekte

Organisationsobjekte sind Objekte, welche reine Organisationsfunktionen innerhalb der Applikation haben. Der Objekthandler selbst ist ein Beispiel für ein Organisationsobjekt.

Durch Ereignisse getriggerte Objekte werden durch ein Ereignis, welches außerhalb der Applikation auftritt, aktiviert. Beispiele für durch ein Ereignis getriggerte Objekte ist das Objekt für die Auswertung von Wahlziffern, die über die Tastatur eingegeben wurden.

Funktionsobjekte werden durch ein Ereignis innerhalb der Applikation aktiviert. In der Regel sind das Funktionsaufrufe, z. B. Abfragen der internen Rufnummerndatenbank.

Kommunikationsobjekte dienen der Verbindung von Objekten. Das kann sowohl interne Kommunikation sein (zwischen residenten Objekten), als auch die Kommunikation mit abgesetzten Objekten, oder gar die Kommunikation von abgesetzten Objekten untereinander, sowie mit der eigentlichen Applikation.

Jedes Objekt ist durch einen Objektkopf beschrieben. Dieser enthält den Namen, die Kennung, die Priorität und die Art des Objekts sowie den Parameterblock:
Kennung
Name
Objektart
Priorität
Zeiger zum Parameterblock

Die Kennung ist eine eindeutige Kennzeichnung des Objekts. Über die Kennung werden die Objekte im Objekthandler verwaltet. Der Name ist optional und dient nur der besseren Kennzeichnung.

Die Objektart beschreibt die Funktionalität (Organisation, Ereignis, Funktion oder Kommunikation). Zusätzlich ist hier vermerkt, ob das Objekt multitreat-fähig ist (mehrfache Aufrufe zur gleichen Zeit) oder ob für jeden Aufruf eine eigene Kopie des Objekts erstellt werden muß.

Die Priorität beschreibt, ob das Objekt generell temporär geladen werden oder abgesetzt ausgeführt werden muß, oder ob der Objekthandler nach den Ressourcen entscheiden kann. Dann wird eine von 60 Prioritätsstufen dem Objekt zugewiesen. Diese Priorität wird vom Systemadministrator als Empfehlung vergeben. Der Objekthandler kann für die Dauer der Registrierung dem Objekt jedoch auch eine temporäre Priorität zuweisen. Diese gilt jedoch nur innerhlab der Reichweite dieses Objekthandlers (in der Regel also nur für ein Kartentelefon).

Eine Registrierung von abgesetzten Objekten erfolgt immer über den Aufruf eines Kommunikationsobjekts. Dieses bekommt entweder den Link zu dem zu registrierenden Objekt übergeben (als Parameter) oder enthält selbst den Link. Kommunikationsobjekte dienen nur zur Registrierung der abgesetzten Objekte. Der eigentliche Aufruf erfolgt immer über den Objekthandler.

### Realisierung der Softwarekomponenten

Die Realisierung der Software erfolgt nach modernen Entwurfsgesichtspunkten des Softwaredesigns. Der erzeugte Programmcode muß objektorientiert und wiederverwendbar sein. Die Erstellung erfolgt auf modernen Entwicklungsumbegungen, die eine lückenlose Dokumentation und Revisionskontrolle ermöglichen. Um den Code hardwareunabhängig zu halten und die einfache Portierung zu ermöglichen, ist die Software in Hochsprachen wie C++ oder JAVA zu programmieren.

## Patentansprüche

1. Digitales Chipkartentelefon (10), umfassend eine Lese-/Schreibeinrichtung (24) für eine Chipkarte (20), gekennzeichnet durch eine Schaltereinrichtung (24), die bei eingesteckter gültiger Chipkarte (20) das Telefon (10) von Normalbetrieb (Funktion wie ein Standardtelefon) auf einen vom Normalbetrieb abweichenden Betrieb umschaltet, dessen Funktion durch im Telefon (10) und/oder in der Chipkarte (20) gespeicherte Daten festgelegt ist.

2. Digitales Chipkartentelefon nach Anspruch 1, dadurch gekennzeichnet, daß das Chipkartentelefon eine integrierte Telefaxweiche und/oder einen Modem-Anschluß zum Betreiben eines Telefaxgerätes oder einer Modemverbindung in Abhangigkeit von in der Chipkarte (20) gespeicherten Daten aufweist.

3. Digitales Chipkartentelefon nach Anspruch 2, dadurch gekennzeichnet, daß die Soft- und/oder Hardware des Chipkartentelefons derart einstellbar ist, daß ein Betrieb sowohl an digitalen Hauptanschlüssen (z. B. EURO-ISDN) als auch an digitalen Nebenstellenanschlüssen hinter Telekommunikationsanlagen unterschiedlicher Bauerart bzw. verschiedener Hersteller möglich ist.

4. Digitales Chipkartentelefon nach einem der Ansprüche 1 bis 3, kennzeichnet durch eine (Mikroprozessor)-Steuerung, die nach Einlesen der Chipkarte (20) deren Gültigkeit anhand von Identifikationskriterien überprüft.

5. Digitales Chipkartentelefon nach einem der Ansprüche 1 bis 4, gekennzeichnet durch eine Steuerung (34), die aus der Chipkarte (20) eine bestimmte Tastaturbelegung (30) für das Telefon (10) ausliest und wirksam werden läßt.

6. Digitales Chipkartentelefon nach eines der Ansprüche 1 bis 5, dadurch gekennzeichnet, daß eine Steuerung vorgesehen ist, die aus der Chipkarte (20) Daten für zu überwachende Wahlsequenzen auszulesen in der Lage ist.

7. Digitales Chipkartentelefon nach einem der Ansprüche 1 bis 6, dadurch gekennzeichnet, daß die Tastatur (16) des Telefons (10) eine Sondertaste umfaßt, die mit einer Steuerung derart verbunden ist, daß bei ihrer Betätigung eine bestimmte, fest vorgegebene Wahlsequenz ausgelöst wird.

8. Digitales Chlpkartentelefon nach einam der Ansprüche 1 bis 7, gekennzeichnet durch eine Speichervorrichtung (32) zur Speicherung der Zeichen einer zu überwachenden gewählten Wahlsequenz, und eine Vergleichereinrichtung zum Vergleich der gewählten, zwischengespeicherten Wahlsequenz, und durch eine Generatoreinrichtung für eine auf der Karte gespeicherte Wahlsequenz bei Übereinstimmung von gespeicherter Wahlsequenz mit zu überwachender Wahlsequenz.

9. Digitales Chipkartentelefon nach einem der Ansprüche 1 bis 8, wobei das Telefon Kurzwahltastengeneratoreinrichtungen aufweist, zur Erzeugung einer vorbestimmten Wahlsequenz bei Betätigung einer Tante oder einer Tastenkombination, dadurch gekennzeichnet, daß die vorbestimmte Wahlsequenz daraufhin überprüft wird, ob sie zu überwachende Zeichenfolgen aufweist und diese durch eine andere, z. B. auf der Chipkarte gespeicherte Folge ersetzt, die anderen Zeichen aber unverändert läßt.

10. Digitales Chipkartentelefon nach einem der Ansprüche 1 bis 9, dadurch gekennzeichnet, daß das Telefon modular aufgebaut ist, wobei insbesondere ein Modul vorgesehen ist, der einen Betrieb an einem digitalen 2-Drahtanschluß und/oder an einem digitalen 4-Drahtanschluß ermöglicht.

11. Digitalen Chipkartentelefon nach Anspruch 10, dadurch gekennzeichnet, daß die Software des Telefons bzw. des Moduls derart einstellbar ist, daß ein Betrieb sowohl an digitalen Hauptanschlüssen (z. B. Euro-ISDN) als auch an digitalen Nebenstellenanschlüssen (z. B. hinter TK-Anlagen verschiedener Hersteller) möglich ist.

12. Digitales Chipkartentelefon nach einem der Ansprüche 1 bis 11, dadurch gekennzeichnet, daß die Chipkarte mit einem SIM-Modul kombiniert wird.

13. Verfahren zum Betrieb eines digitalen Chipkartentelefons, insbesondere nach einem der Ansprüche 1 bis 12, gekennzeichnet durch
Bereitstellen eines Betriebsystems zur Implementierung der Grundfunktionen des Chipkartentelefons oder ähnlichen Gerätes (z. B. Internet-PC, Labtop, Kommunikator), wie zum Betrieb des Chipkartentelefons als normales Telefon, zur Bedienung der Schnittstellen (wie ISDN, a/b), der Funktionselemente des Telefons (Display, Tastatur, Kartenleseeinrichtung), sowie zur Implementierung eines Befehlsinterpreters für Zusatzfunktionen, wobei der Befehlsinterpreter einen Standard-Befehlssatz umfaßt, der um externe Befehle (Zusatzbefehle) erweiterbar ist.

14. Verfahren zum Betrieb eines digitalen Chipkartentelefons nach Anspruch 13, dadurch gekennzeichnet,
daß auf der Chipkarte kundenspezifische Programmteile gespeichert werden, wobei ein Programmteil aus kundenspezifischen Befehlen besteht (Erweiterung des Befehlsinterpreters um neue Befehle), ein anderer Teil aus dem vom Interpreter auszuführenden Programmcode.

15. Verfahren zum Betrieb eines digitalen Chipkartentelefons nach einem der Ansprüche 13 bis 14, dadurch gekennzeichnet,
daß zur Trennung der Intelligenz des Endgerätes von der Anwendung der Befehlsinterpreterfunktionen einen Zugriff auf externe Datenquellen aufweist, wo kundenspezifische Befehle (Erweiterung des Befehlsinterpreters) und/oder Programmcode liegt, wobei insbesondere die Daten für den Befehlsinterpreter von dedizierten Servern wie auch von externen Datenquellen (z. B. aus dem Internet) erhalten werden.

16. Verfahren zum Betrieb eines digitalen Chipkartentelefons nach einem der Ansprüche 13 bis 15, dadurch gekennzeichnet,
daß eine Anwendungsfunktion des Endgerätes, wie Telefon, durch Tausch der Chipkarte festgelegt wird, wobei z. B. eine Anwendungsfunktion des Endgerätes, wie Telefon, die automatische Verteilung von Tabellen für Least-Cost-Routing ist, eine weitere Anwendungsfunktion die End- zu End-Verschlüsselung ist, und eine noch andere Anwendungsfunktion die netzwerkweite ACD-Anwendung ist.

17. Verfahren Zum Betrieb eines digitalen Chipkartentelefons nach einem der Ansprüche 13 bis 16, dadurch gekennzeichnet,
daß das Verfahren ein Betriebssystem verwendet, das aus einem Systemkern (Kernel) besteht, welcher die Anpassung an die aktuelle Hardware realisiert, umfassend insbesondere Routinen zur Tastatur-Abfrage, Display-Steuerung und Steuerung der ISDN-Interfaces, sowie hardewareunabhängiger Software, die über ein Applikationsinterface (API) auf die Funktionen des Kernels zugreift, wobei diese hardwareunabhängige Software vorzugsweise als dynamisch linkbare Objekte realisiert ist, wobei ein Objekt sowohl Programm-Code als auch Daten umfaßt.

18. Verfahren zum Betrieb eines digitalen Chipkartentelefons nach Anspruch 17, dadurch gekennzeichnet,
daß die dynamisch linkbaren Objekte resident im Speicher des Kartentelefons oder der Chipkarte (residente Objekte), temporär im RAM des Kartentelefons (temporäre Objekte) oder abgesetzt auf dedizierten Servern, im Internet oder auf anderen Kartentelefonen (abgesetzte Objekte) liegen.

19. Verfahren zum Betrieb eines digitalen Chipkartentelefons nach Anspruch 18, dadurch gekennzeichnet,
daß die Verbindung der einzelnen Objekte mittels eines Objekthandlers erfolgt, der die Registrierung und die Verbindung der Objekte übernimmt, wobei vorzugsweise der Objekthandler beim Start des Systems (Einschalten) initialisiert wird und alle Objekte in seinem Zugriffsbereich registriert, und desweiteren der Objekthandler die Systemumgebung auf das Erscheinen neuer Objekte (z. B. Einstecken der Chipkarte mit Programm und Daten) überwacht und derartige Objekte in die Registrierung des Objekthandlers übernimmt.

20. Verfahren zum Betrieb eines digitalen Chipkartentelefons nach Anspruch 19, dadurch gekennzeichnet,
daß abgesetzte Objekte durch einen Aufruf eines residenten Objektes, welches einen Link zum Standort des Objekts (z. B. Serveradresse) enthält, initialisiert werden, und daß nach Initialisierung des abgesetzten Objekts der Verbund zu dem Standort des Objektes hergestellt und das Objekt angemeldet wird, wobei vorzugsweise bei der Anmeldung des Objekts festgelegt wird, ob das Objekt abgesetzt bleibt, temporär in den RAM geladen wird oder ob des Objekthandler die Entscheidung zugeordnet wird, bei knappen Ressourcen entsprechend der Ressourcenauslastung eine Wahl zu treffen, ggf. unter Berücksichtung einer angegebenen Priorität.

21. Verfahren zum Betrieb eines digitalen Chipkartentelefons nach Anspruch 20, dadurch gekennzeichnet,
daß die dynamisch linkbaren Objekte Organisationsobjekte (reine Orangisationsfunktion in einer Applikation), durch ein Ereignis getriggerte Objekte (Atkivierung durch ein Ereignis außerhalb der Applikation, z. B. der Auswertung von über die Tastatur eingegebenen Wahlziffern), Funktionsobjekte (Aktivierung durch Ereignisse innerhalb der Applikation, z. B. Abfrage der internen Rufnummerndatenbank) oder Kommunikationsobjekte (dienen der Verbindung von Objekten) sind, wobei z. B. die Kommunikationsobjekte zur Verbindung von Objekten als interne Kommunikation, (zwischen residenten Objekten, zwischen residenten und abgesetzten Objekten oder zwischen abgesetzten Ob- jekten, sowie mit der eigentlichen Applikation) dienen.

22. Verfahren zum Betrieb eines digitalen Chipkartentelefons nach Anspruch 21, dadurch gekennzeichnet,
daß das Objekt einen Objektkopf umfaßt, der einen Namen (optional), eine Kennung (eindeutige Kennzeichnung des Objekts), die Priorität (temporär zu laden oder abgesetzt auszuführen oder Entscheidung durch Objekthandler nach Ressourcen), die Art (Funktionalität, nämlich Organisation, Ereignis, Funktion oder Kommunikation) des Objektes sowie einen Parameterblock umfußt.

23. Verfahren zum Betrieb eines digitalen Chipkartentelefons nach einem der Ansprüche 19 bis 22, dadurch gekennzeichnet,
daß der Objekthandler für die Dauer der Registrierung dem Objekt eine temporäre Priorität zuweist, die innerhalb der Reichweite dieses Objekthandlers liegt (z. B. nur für ein Kartentelefon).

24. Verfahren zum Betrieb eines digitalen Chipkartentelefons nach einem der Ansprüche 18 bis 22, dadurch gekennzeichnet,
daß die Registrierung von abgesetzten Objekten über den Aufruf eines Kommunikationsobjektes erfolgt, welches daraufhin entweder den Link zu des zu registrierenden Objekt (als Parameter) übergeben bekommt, oder selbst den Link erhalt.
